# EUROPÄISCHE PATENTSCHRIFT

(11) **EP 1 235 683 B1**
(45) Veröffentlichungstag und Bekanntmachung des Hinweises auf die Patenterteilung: **20.08.2003**
(21) Anmeldenummer: 00987003.1
(22) Anmeldetag: 21.10.2000
(51) Int. Cl.: B32B 17/10, C03C 27/12

(54) **VERFAHREN UND FOLIE ZUR HERSTELLUNG VON VERBUNDSICHERHEITSSCHEIBEN**
METHOD AND FILM FOR PRODUCING LAMINATED SAFETY GLASS PANES
PROCEDE ET FILM PERMETTANT DE PRODUIRE DES VITRES DE SECURITE COMPOSITES

(30) Priorität: 25.10.1999 DE 19951444
(43) Veröffentlichungstag der Anmeldung: 04.09.2002
(73) Patentinhaber: HT TROPLAST AG, 53840 Troisdorf (DE)
(72) Erfinder: STENZEL, Holger, 53773 Hennef (DE); KOLL, Bernhard, 53757 Sankt Augustin (DE); BECKER, Günter, 53844 Troisdorf (DE)
(86) Internationale Anmeldenummer: DE0003708
(87) Internationale Veröffentlichungsnummer: WO01030568

(56) Entgegenhaltungen:
- EP-A- 0 185 796
- EP-A- 0 304 898
- DE-C- 19 712 145
- PATENT ABSTRACTS OF JAPAN vol. 1998, no. 14, 31. Dezember 1998 (1998-12-31) & JP 10 231150 A (SEKISUI CHEM CO LTD), 2. September 1998 (1998-09-02)

## Beschreibung

### Technisches Gebiet

Die Erfindung betrifft ein Verfahren und eine Folie zur Herstellung von Verbundsicherheitsscheiben, bestehend aus zumindest zwei Glasscheiben und einer Zwischenschicht aus weichmacherhaltigem teilacetalisiertem Polyvinylalkohol, insbesondere aus weichmacherhaltigem Polyvinylbutyral (PVB), in einem einstufigen, autoklavenfreien Verfahren.

Verbundsicherheitsscheiben, bestehend aus zwei Glasscheiben und einer die Glasscheiben verbindenden Klebefolie, z. B. aus Polyvinylbutyral (PVB), werden insbesondere als Windschutzscheiben in Kraftfahrzeugen eingesetzt, wobei gegebenenfalls eine Glasscheibe durch eine Kunststoffscheibe, vornehmlich aus einem amorphen Polyamid, transparentem PMMA, Polycarbonat oder Polyester, ersetzt sein kann. Auch auf dem Bausektor, z. B. als Fensterscheiben oder als Zwischenwände, werden solche Silikatglas/Silikatglas- bzw. Silikatglas/Kunststoff-Verbunde eingesetzt, wobei gegebenenfalls je nach ihrer Verwendung, z. B. als Verbundpanzergläser, auch Mehrfachverbunde, also Verbunde, die aus mehr als zwei tragenden Schichten bestehen, eingesetzt werden.

Während Verbundsicherheitsscheiben für den Baubereich i.a. eine möglichst hohe Haftung zwischen Glas und Klebefolie aufweisen sollen, wird für Verbundsicherheitsscheiben für Kraftfahrzeuge eine definierte, nicht zu hohe Haftung angestrebt.

Soweit in dieser Anmeldung der Begriff Polyvinylbutyral (PVB) verwendet wird, sollen damit gleichzeitig auch diejenigen Polymere eingeschlossen werden, die ähnliche Eigenschaften in Bezug auf Ihre Verwendbarkeit haben wie (weichmacherhaltiges) Polyvinylbutyral. Hierzu gehören allgemein teilacetalisierte Polyvinylalkohole und beispielsweise weichmacherfreie Ethylen-Vinylacetat-Copolymere. Als relevante Eigenschaften werden hier insbesondere die Klebrigkeit der Oberfläche, die Weichheit und die Gummielastizität bei Raumtemperatur angesehen.

### Stand der Technik

Weichmacherhaltige Folien auf der Basis von Polyvinylbutyral (PVB) zur Herstellung von Sicherheitsverbundgläsern sind bereits bei Raumtemperatur sehr weich und klebrig. Die hohe Klebrigkeit ist zwar unerläßlich für den Zusammenhalt des Verbundes Glas-Folie-Glas in Verbundgläsern, für den Transport und den Verarbeitungsprozeß zu diesen Gläsern muß die Klebrigkeit jedoch vorübergehend beseitigt werden. Hierzu ist es allgemein bekannt, die Folien ein- oder beidseitig mit einer aufgerauhten Oberfläche zu versehen. Üblicherweise liegen die Rauhigkeitswerte, gemessen als Rz nach DIN 4768, zwischen 15 und 35 µm. Ein typischen Verfahren zur Herstellung solcher Folien mit aufgerauhter Oberfläche ist aus der EP 0 185 863 B1 bekannt.

Für die Herstellung von Verbundsicherheitsscheiben wird allgemein ein zweistufiger Herstellungsprozeß eingesetzt. In einem ersten Schritt wird ein sogenannter Vorverbund, bestehend aus den beiden Glasscheiben und der dazwischen angeordneten Klebefolie, üblicherweise aus PVB, angefertigt. Dieser Vorverbund wird in einem zweiten Prozeßschritt in einem Autoklaven bei Temperaturen von ca. 130 - 145°C und Drücken von mindestens 11 bar zu der eigentlichen Verbundsicherheitsscheibe verpreßt. Dieses Verfahren wird beispielsweise in der Einleitung der EP 0 331 648 A2 beschrieben. Der Wassergehalt der verwendeten PVB-Folie beeinflußt die Klebkraft des Verbundes maßgeblich. Üblicherweise wird ein Wassergehalt von 0,40 bis 0,55 Gew.-% der Folie - mit sehr geringen Toleranzen - eingehalten. Bedingt durch den Einsatz eines Autoklaven ist dieser bekannte Zweistufen-Prozeß relativ aufwendig und erfordert eine hohe Investition, so daß er für kleine Produktionsmengen unrentabel ist.

Aus der EP C 331 648 A2 ist ein autoklavenfreies Verfahren zur Herstellung von Verbundsicherheitsscheiben bekannt. Bei diesem bekannten Verfahren werden die Glasscheiben mit der zwischenliegenden FVB-Folie in einem luftdichten, evakuierten Sack bei erhöhter Temperatur durch den äußeren Luftdruck zusammengeklebt. Aus dieser Schrift ist ebenfalls bekannt, daß die verwendete FVB-Folie zur Vermeidung von Blasen im Verbund einen möglichst geringen Wassergehalt haben sollte. Allerdings ist die Trocknung einer Folie und die Handhabung einer so trockenen Folie relativ aufwendig.

Aus der DE 196 43 404 A1 ist ein weiteres autoklavenfreies Verfahren zur Herstellung von Verbundsicherheitsscheiben bekannt, bei dem eine weichmacherhaltige teilacetalisierte Polyvinylalkohol-Folie mit einem Wassergehalt von weniger als 0,35 Gew.-%, bezogen auf die Masse der Folie, und einem wirksamen Gehalt eines die Haftung erhöhenden silicium-organofunktionellen Silans verwendet wird. Die exakte Einstellung eines so niedrigen Wassergehaltes ist jedoch sehr problematisch.

In der US 5,536,347 A1 wird in einem autoklavenfreies Verfahren zur Herstellung von Verbundsicherheitsscheiben eine PVB-Folie eingesetzt, die auf beiden Seiten eine spezielle geometrische Struktur aufweist. Solche Strukturen sind nur mit besonderen Prägeverfahren herzustellen und eignen sich nicht für viele Anlagen zur Herstellung von PVB-Folien. Weitere Verfahren zur Herstellung von Folien mit regelmäßig geformten, geometrisch angeordneten Oberflächenstrukturen sind aus der DE 32 08 820 C2 und der US 5,478,412 A1 bekannt, wobei die Verwendung in einem autoklavenfreien Verfahren nicht offenbart wird.

Aus der US 5,425,977 A1 ist ein Verfahren zur Herstellung von PVB-Folien mit regelmäßiger Oberflächenstruktur mit einer Rauhigkeit R_{z} kleiner 75 µm, bevorzugt kleiner 50 µm bekannt. Die Verwendung in einem autoklavenfreien Verfahren wird nicht offenbart. Gleiches gilt für das Verfahren nach der US 4,925,725. Die hier beschriebene Folie kann ebenfalls nur in einem aufwendigen Prägeprozeß hergestellt werden.

### Aufgabe

Aufgabe der vorliegen Erfindung ist es, unter Vermeidung der geschilderten Nachteile ein Verfahren zur Herstellung von Verbundsicherheitsscheiben, bestehend aus zumindest zwei Glasscheiben und einer Zwischenschicht aus weichmacherhaltigem teilacetalisiertem Polyvinylalkohol, in einem einstufigen, autoklavenfreien Verfahren zur Verfügung zu stellen, das mit ausreichender Prozeßsicherheit zu blasenfreien Verbundsicherheitsscheiben führt. Ein weiteres Anliegen der Erfindung ist es, eine Zwischenschicht aus weichmacherhaltigem teilacetalisiertem Polyvinylalkohol für die Verwendung in einem autoklavenfreien Verfahren zur Verfügung zu stellen, die ohne aufwendiges Prägeverfahren hergestellt werden kann.

### Darstellung der Erfindung

Die Erfindung löst diese Aufgabe durch den Einsatz einer PVB-Folie mit einer einseitig oder bevorzugt beidseitig aufgebrachten Oberflächenstruktur mit einer Rauhigkeit von R_{z} > 70 µm und R_{z} < 150 µm, bevorzugt in Verbindung mit einem oder mehreren Merkmalen der Unteransprüche. Liegt die Oberflächenrauhigkeit R_{z} unter 70 µm, kommt es zu einem Verschließen der Ränder des Verbundsicherheitsglases während der Aufheizphase, bevor die Luft vollständig aus der Grenzfläche PVB/Glas evakuiert werden kann. Die Folge sind Lufteinschlüsse (Blasen) in der Mitte des Verbundsicherheitsglases. Bei zu hoher Oberflächenrauhigkeit (R_{z} > 150 µm) erhöht sich die zum Abschmelzen der Rauhigkeitsspitzen benötigte Energie und der Prozeß verlängert sich unakzeptabel.

Bevorzugt wird die Oberflächenstruktur im Extrusionsprozeß unmittelbar vor Austritt der Kunststoffschmelze aus der Extrusionsdüse durch das sogenannte Fließ- oder Schmelzbruchverfahren entsprechend der EP 0 185 863 B1 aufgebracht. Unterschiedliche Rauhigkeitsniveaus können durch Variation der Austrittsspaltweite und der Düsen-Lippentemperaturen unmittelbar am Düsenaustritt gezielt erzeugt werden. Dieses Verfahren führt zu einer unregelmäßigen, annähernd isotropen Rauhigkeit (random roughness). Das heißt, der Meßwert der Rauhigkeit ist über alle Richtungen gemessen annähernd gleich, wobei die einzelnen Erhebungen und Vertiefungen jedoch unregelmäßig in ihrer Höhe und Verteilung angeordnet sind.

Soweit in dieser Schrift der Begriff Oberflächenrauhigkeit R_{z} oder Rauhigkeitswert R_{z} verwendet wird, erfolgt die Messung der Oberflächenrauhigkeit nach DIN 4768 oder DIN EN ISO 4287 und DIN ISO 4288. Die zur Messung der Oberflächenrauhigkeit verwendeten Meßgeräte müssen der EN ISO 3274 genügen. Die eingesetzten Profilfilter müssen der DIN EN ISO 11562 entsprechen.

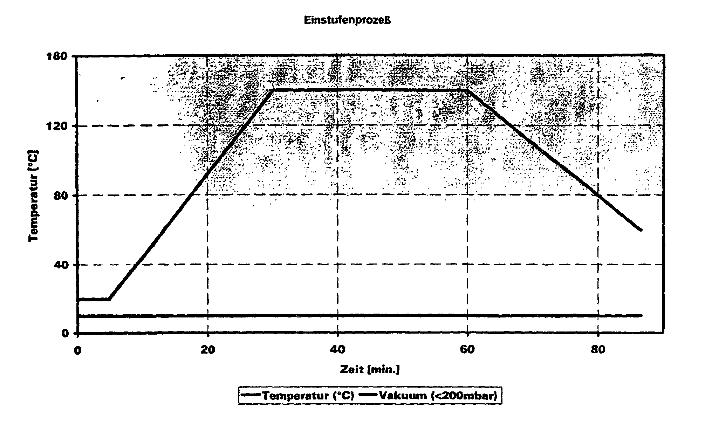

Das bevorzugt für die Erfindung eingesetzte Herstellverfahren für Verbundsicherheitsgläser mit der erfindungsgemäß eingesetzten Folie ist ein Einstufenvakuumprozeß analog dem Vakuumring- bzw. Vakuumsackverfahren. Beim Vakuumsackverfahren wird das lose verlegte Sandwich aus Glas/Folie/Glas in einen Kunststoffoder Gummisack verbracht. Anschließend wird dieser luftdicht versiegelt und mit einem Vakuumventil bevorzugt in Scheibenmitte versehen. Bei großformatigen Scheiben können auch zwei Vakuumventile vorgesehen werden. Über eine Vakuumpumpe wird zunächst ein Vakuum kleiner 200 mbar aufgegeben und 5 min. bei Raumtemperatur evakuiert. Anschließend wird unter Beibehaltung des Vakuums in einem Umluftschrank das Sandwich auf 140°C aufgeheizt. Die Aufheizrate beträgt dabei je nach Heizleistung 4 bis 6 °C/min, so daß die Haltetemperatur von 140°C nach 20 bis 30 min. erreicht ist. Anschließend wird die Temperatur für 30 min. bei 140 °C gehalten. Danach muß auf min. 60°C abgekühlt werden, bevor das Vakuum entfernt werden darf. Fig. 1 zeigt den Temperaturverlauf dieses bevorzugten Einstufenprozesses.

### Beispiele zur Ausführung der Erfindung und Vergleichsbeispiele

### Beispiel 1

Zunächst wurden Vorversuche mit verschieden rauhen PVB-Folien durchgeführt. Tabelle 1 zeigt die mittleren Oberflächenrauhigkeiten R_{z} der einzelnen Folien:

**Tabelle 1**

| Folie | Mittl. Oberflächenrauhigkeit R_{z} (µm) Seite 1/Seite 2 |
|---|---|
| PVB 1 | 35/35 |
| PVB 2 | 55/55 |
| PVB 3 | 85/85 |
| PVB 4 | 115/115 |

Es wurden plane Verbundsicherheitsglas-Muster im Format 500 x 1100 mm im oben beschriebenen einstufigen Vakuumverfahren hergestellt. Dabei zeigten die Folien PVB 1 und PVB 2 Lufteinschlüsse im Mittelbereich der Scheiben. Dies deutet auf einen Randverschluß hin, bevor die Scheiben komplett evakuiert waren. Die Folien PVB 3 und PVB 4 hingegen waren völlig transparent. Einen Vergleich der Verbundeigenschaften mit einem nach dem Zweistufenverfahren hergestellten Verbundsicherheitsglas (PVB 4) zeigt Tabelle 2:

**Tabelle 2**

| (F = Feuerseite des Glases, Sn = Zinnseite des Glases) | | | |
|---|---|---|---|
| Folie | | PVB 4 | |
| Verbundsicherheitsglas-Prüfung | | Autoklav (Zweistufenverfahren, Vergleichsbeispiel) | Vakuumverfahren (Einstufenverfahren,erfindungsgemäß) |
| Feuchte | [%] | 0,43 | 0,43 |
| Pummelhaftung F/F | | 5 | 5 |
| Sn/Sn | | 4 | 4 |
| Schertesthaftung F/Sn | [N/mm2] | 13,9 | 13,6 |
| Baketest i.O.bei Temp.C° | | 140 | 150 |
| In.Blasen | | 4 | keine |

Die Haftungswerte zwischen Folie und Glas, in Tabelle 2 ausgedrückt durch den Pummelwert und den Schertest, liegen bei beiden Verbundsicherheitsgläsern auf gleichem Niveau. Nach dem sogenannten Baketest, der eine Aussage über die Qualität Verbundherstellung gibt, insbesondere über die Neigung zur Blasenbildung, zeigt das Verbundsicherheitsglas, hergestellt nach dem Einstufenprozeß, selbst bei 150°C keine Blasen.

### Beispiel 2 (erfindungsgemäß)

Ausgehend von diesen Vorversuchen mit planen Scheiben wurden nun 2 unterschiedliche Windschutzscheibentypen im Einstufenprozeß hergestellt. Verwendet wurde die Folie PVB 4. Tabelle 3 zeigt die Abmessungen der eingesetzten Windschutzscheibentypen (WSS) :

**Tabelle 3**

| Typ | Breite | Höhe | Längsbiegung | Querbiegung |
|---|---|---|---|---|
| | min/max (mm) | min/max (mm) | min/max (mm) | max (mm) |
| WSS 1 | 1100/1410 | 620/660 | 90/30 | 0 |
| WSS 2 | 1170/1510 | 660/780 | 110/50 | 17 |

Beide Scheiben zeigten sich nach dem Prozeß mit einwandfreier Optik. Die Haftungswerte und das Ergebnis nach Baketest entspricht den Werten des Beispiels 1 Tabelle 2.

Die Folien in den Beispielen 1 und 2 wurden sämtlich nach dem sogenannten Fließ- bzw. Schmelzbruchverfahren entsprechend der EP 0 185 863 B1 hergestellt. Dieses Verfahren führt zu rauhen Oberflächen mit statistisch zufälliger Verteilung von Erhöhungen und Vertiefungen ohne regelmäßige Muster oder Strukturen.

## Patentansprüche

1. Verfahren zur Herstellung von Verbundsicherheitsscheiben, bestehend aus zumindest zwei Glasscheiben und einer Zwischenschicht aus weichmacherhaltigem teilacetalisiertem Polyvinylalkohol, in einem einstufigen, autoklavenfreien Verfahren, **gekennzeichnet durch** die Verwendung einer weichmacherhaltigen teilacetalisierten Polyvinylalkohol-Folie mit einem Rauhigkeitswert R_{z} zwischen 70 µm und 150 µm.

2. Verfahren nach Anspruch 1, **gekennzeichnet durch** die Verwendung einer weichmacherhaltigen teilacetalisierten Polyvinylalkohol-Folie mit einem Rauhigkeitswert R_{z} zwischen 80 µm und 120 µm.

3. Verfahren nach einem der Ansprüche 1 oder 2, **gekennzeichnet durch** die Verwendung einer weichmacherhaltigen teilacetalisierten Polyvinylalkohol-Folie mit unregelmäßiger (random) Rauhigkeitsstruktur.

4. Weichmacherhaltige teilacetalisierte Polyvinylalkohol-Folie für ein Verfahren nach einem der Ansprüche 1 bis 3, **dadurch gekennzeichnet, daß** die Folie einen Rauhigkeitswert R_{z} zwischen 70 µm und 150 µm aufweist.

5. Weichmacherhaltige teilacetalisierte Polyvinylalkohol-Folie für ein Verfahren nach einem der Ansprüche 2 oder 3, **dadurch gekennzeichnet, daß** die Folie eine unregelmäßige Rauhigkeit mit R_{z} zwischen 80 µm und 150 µm aufweist.

## Claims

1. A process for producing laminated safety glass, composed of at least two panes of glass and of an intermediate layer made from plasticized, partially acetalized polyvinyl alcohol, in a single-stage process not using an autoclave, which comprises using a plasticized, partially acetalized polyvinyl alcohol film with roughness R_{Z} of from 70 to 150 µm.

2. The process as claimed in claim 1, wherein use is made of a plasticized, partially acetalized polyvinyl alcohol film with roughness R_{Z} of from 80 to 120 µm.

3. The process as claimed in claim 1 or 2, wherein use is made of a plasticized, partially acetalized polyvinyl alcohol film with random roughness structure.

4. A plasticized, partially acetalized polyvinyl alcohol film for a process as claimed in any of claims 1 to 3, where the film has roughness R_{z} of from 70 to 150 µm.

5. A plasticized, partially acetalized polyvinyl alcohol film for a process as claimed in claim 2 or 3, wherein the film has random roughness with R_{z} of from 80 to 150 µm.

## Revendications

1. Procédé de fabrication de vitres de sécurité composites, comprenant au moins deux feuilles de verre et une couche intermédiaire en un alcool polyvinylique contenant un plastifiant et partiellement acétalisé, dans un procédé mono-étape sans autoclave, **caractérisé par** l'utilisation d'un film d'un alcool polyvinylique contenant un plastifiant et partiellement acétalisé avec une rugosité R_{z} comprise entre 70 µm et 150 µm.

2. Procédé selon la revendication 1, **caractérisé par** l'utilisation d'un film d'alcool polyvinylique contenant un plastifiant et partiellement acétalisé avec une rugosité R_{z} comprise entre 80 µm et 120 µm.

3. Procédé selon une des revendications 1 ou 2, **caractérisé par** l'utilisation d'un film d'alcool polyvinylique contenant un plastifiant et partiellement acétalisé avec une structure de rugosité non régulière (aléatoire).

4. Film d'alcool polyvinylique contenant un plastifiant et partiellement acétalisé pour un procédé selon une des revendications 1 à 3, **caractérisé en ce que** le film présente une rugosité R_{z} comprise entre 70 µm et 150 µm.

5. Film d'alcool polyvinylique contenant un plastifiant et partiellement acétalisé pour un procédé selon une des revendications 2 ou 3, **caractérisé en ce que** le film présente une rugosité non régulière, avec R_{z} comprise entre 80 µm et 150 µm.
